(19) **Europäisches Patentamt**

**European Patent Office**

**Office européen des brevets**

(11) Veröffentlichungsnummer: **0 277 575 B1**

(12) # EUROPÄISCHE PATENTSCHRIFT

(45) Veröffentlichungstag der Patentschrift:
14.03.90

(21) Anmeldenummer: 88101010.2

(22) Anmeldetag: 25.01.88

(51) Int. Cl.⁴: **F16L 21/06, F16L 47/04**

(54) **Rohrkupplung.**

(30) Priorität: 31.01.87 DE 3702948

(43) Veröffentlichungstag der Anmeldung:
10.08.88 Patentblatt 88/32

(45) Bekanntmachung des Hinweises auf die Patenterteilung:
14.03.90 Patentblatt 90/11

(84) Benannte Vertragsstaaten:
CH DE ES FR GB IT LI NL SE

(56) Entgegenhaltungen:
EP-A- 0 205 896
DE-A- 3 013 312
DE-A- 3 202 367
US-A- 4 400 018
US-A- 4 421 347

(73) Patentinhaber: Agintec AG, Limmattalstrasse 395,
CH-8049 Zürich(CH)

(72) Erfinder: Maier, Hans Paul, Limmattalstrasse 395,
CH-8049 Zürich(CH)

(74) Vertreter: Gramm, Werner, Prof. Dipl.-Ing. et al,
Patentanwälte Gramm + Lins
Theodor-Heuss-Strasse 2, D-3300 Braunschweig(DE)

ACTORUM AG

## Beschreibung

Die Erfindung betrifft eine Rohrkupplung zum Anschluß eines ersten Rohres an einem zweiten Rohr einen Rohrbogen, einer Armatur, einer Maschine o.dergl., mit zumindest zwei Halbschalen, die unter Bildung einer Axialfuge das erste Rohr umgreifen, durch radialwirkende Spannmittel gegeneinander spannbar sind, mit einem radial nach innen ragenden Ringbund einen Kupplungskragen axial hintergreifen und gemeinsam einen Dichtungsring umschließen, der sich auf der Rohrwand über eine radial wirkende Dichtfläche und in axialer Richtung einerseits direkt oder indirekt an dem genannten Kupplungskragen und andererseits an einem ebenfalls von den Halbschalen umschlossenen, lose auf das erste Rohr aufgeschobenen Stützring abstützt, der beim Anziehen der genannten Spannmittel über einen Innenkonus der Halbschalen in axialer Richtung beaufschlagt wird und dadurch den in eine konische Dichtungskammer des Stützringes ragenden Dichtungsring gegen den Kupplungskragen drückt.

Eine derartige Ausführungsform läßt sich der DE-A 35 08 287 entnehmen. Offenbart sind verschiedene Ausführungsformen für Rohranschlüsse an Armaturen oder Maschinen. Auf ein stumpf mit einem freien Rohrstutzen zu verbindendes Rohrende werden ein Flansch, ein Klemmelement sowie ein Kammerteil aufgeschoben. Letzteres weist eine zum Flansch hin offene, kreisringförmige Klemmkammer auf, in die das Klemmelement eingeschoben wird, das aus einer konisch oder konvex ausgebildeten Scheibe besteht, die sich mit einem radial innenliegenden Klemmrand auf dem Rohrende abstützt und hinsichtlich ihres radial außenliegenden Klemmrandes von einer ringförmigen Klemmfläche der Klemmkammer übergriffen wird. In entlastetem Zustand ragt das Klemmende über die Stirnfläche des Kammerteils hinaus. Die Ausbildung der Klemmelemente ist dabei so gewählt, daß eine die Klemmelemente in axialer Richtung gegen die Rückseite der Klemmkammer drückende Kraft zu einer Vergrößerung des Außendurchmessers und gleichzeitig zu einer Verkleinerung des Innendurchmessers des Klemmelementes führt. Das Kammerteil ist mit einer jeweils zum Verbindungsstoß hin offenen Dichtungskammer versehen, die konusförmig ausgebildet ist, sich also in Richtung auf den benachbarten Flansch verjüngt. Der Verbindungsstoß wird von einer Dichtung umschlossen, die als Elastomer-Formdichtung ausgebildet ist, in die ein Innenring eingebettet ist. Die Außenkontur der Dichtung entspricht etwa der der beiden Dichtungskammern, weist jedoch ein Übermaß auf, so daß ein Gegeneinanderdrücken der beiden Kammerteile die Dichtung mit einem Druck beaufschlagt, der axial und radial nach innen gerichtet ist. Bei der Ausführungsform gemäß Figur 8 dieser Vorveröffentlichung werden die Verbindungsmittel durch zwei Halbschalen gebildet, die die beiden Flansche klemmend hintergreifen. Dabei weist der rohrseitige Flansch auf seiner dem Kammerteil abgewandten Seite einen konusförmigen Ansatz auf, gegen den ein entsprechend konisch ausgebildeter Bund der Halbschalen anliegt.

Beide Halbschalen sind mit axialen Bund-Ansätzen versehen, um hier radial gegeneinander verspannt zu werden.

Der Erfindung liegt die Aufgabe zugrunde, eine einfacher aufgebaute Rohrkupplung zu entwickeln.

Diese Aufgabe wird gemäß der Erfindung durch folgende Merkmale gelöst:

a) Die Halbschalen liegen mit der mit Oberflächenprofilierungen versehenen Innenwandung eines buchsenförmigen Abschnittes auf der Rohrwand des ersten Rohres auf, so daß ein Anziehen der genannten Spannmittel zu einem Eindrücken der genannten Oberflächenprofilierungen in die Rohrwand führt,

b) der Dichtungsring besteht aus einem vollständig auf das erste Rohr aufgeschobenen Formring, der mit einer vorzugsweise rechtwinklig zur radial wirkenden Dichtfläche liegenden axial wirkenden Dichtfläche an der planen Stirnfläche des Kupplungskragens anliegt und eine seine beiden Dichtflächen miteinander verbindende Mantelfläche in Form eines Viertelkreissegmentes aufweist;

c) der Stützring begrenzt zusammen mit der planen Stirnfläche des Kupplungskragens und der Rohrwand eine ringförmige, im Querschnitt angenähert dreiecksförmige Dichtungskammer, die bei gegeneinander verspannten Halbschalen gegenüber der Außenkontur des unbelasteten Dichtungsringes ein Untermaß aufweist.

Erfindungsgemäß umfassen also die Halbschalen neben dem Kupplungskragen und dem Dichtungsring nur noch einen Stützring, der eine konische Ringscheibe sein und aus Kunststoff bestehen kann. Diese leichte und preiswerte Scheibe ersetzt somit den bei der vorbekannten Ausführungsform erforderlichen lose aufgeschobenen Flansch sowie das ebenfalls aufgeschobene Kammerteil. Die in die Halbschalen integrierten Oberflächenprofilierungen machen die Verwendung eines separaten Klemmringes überflüssig. Die erfindungsgemäßen Oberflächenprofilierungen lassen sich über eine größere Fläche verteilen, so daß sich die erfindungsgemäße Konstruktion vor allem auch für Kunststoffrohre eignet. Der erfindungsgemäße Dichtungsring weist gegenüber der vorbekannten Ausführungsform nur noch den halben Querschnitt auf.

Zum Radialverspannen der Halbschalen können bekannte Spannmittel Verwendung finden. So könnten z.B. die Halbschalen mit axialen Bund-Ansätzen versehen sein, die über Schrauben, Klammern o.dergl. gegeneinander verspannt werden. Meist wird es aber zweckmäßig sein, wenn die genannten Spannmittel eine den buchsenförmigen Abschnitt der beiden Halbschalen umschlingende Spannschelle umfassen. Hierdurch läßt sich der Druck breitflächig und unmittelbar im Bereich der Oberflächenprofilierungen aufbringen.

Dient die erfindungsgemäße Rohrkupplung zur Verbindung zweier Rohre, dann ist es vorteilhaft, wenn der Kupplungskragen durch den einen U-Schenkel eines im Querschnitt U-förmigen Kupplungsringes gebildet ist, der mit seinem U-Steg die beiden Rohre übergreift.

Weitere Merkmale der Erfindung sind Gegenstand der Unteransprüche und werden in Verbindung mit weiteren Vorteilen der Erfindung anhand von Ausführungsbeispielen näher erläutert.

Die Bezeichnung "Halbschale" ist nicht beschränkt auf sich über etwa 180 Umfangsgrad erstreckende Schalen. Es können z.B. auch drei oder vier Halbschalen Verwendung finden, die sich dann über jeweils etwa 120 bzw. 90 Umfangsgrad erstrecken.

In der Zeichnung sind einige als Beispiele dienende Ausführungsformen der Erfindung dargestellt. Es zeigen:

Figur 1 im Längsschnitt sowie in Seitenansicht eine Kupplung zwischen zwei Rohren;

Figur 2 die Rohrkupplung gemäß Figur 1 in Stirnansicht;

Figur 3 eine Halbschale in Stirnansicht gemäß dem Pfeil A in Figur 1;

Figur 4 ein Detail der Figur 1 in vergrößertem Maßstab,

Figur 5 in vergrößertem Maßstab in Draufsicht einen Dichtungsring;

Figur 6 den Dichtungsring gemäß Figur 5 im Querschnitt und

Figur 7 in einer Darstellung gemäß Figur 1 eine Rohrkupplung mit einem T-Stück o.dergl..

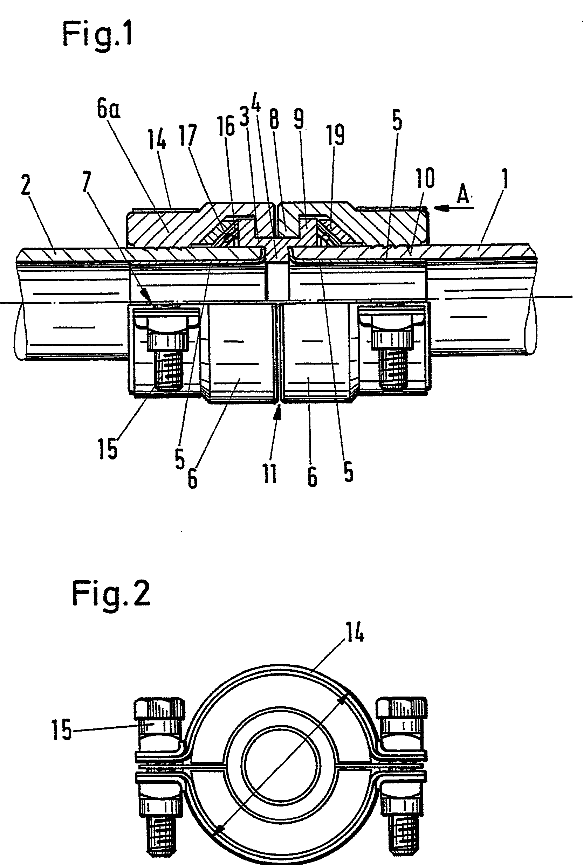

Figur 1 zeigt eine Rohrkupplung zum Anschluß eines ersten Rohres 1 an einem zweiten Rohr 2. Zwischen den beiden Rohren 1,2 ist ein Kupplungsring 3 angeordnet, der im Querschnitt U-förmig ausgebildet ist, mit seinem U-Steg die beiden Rohre 1,2 übergreift und mit einem ringförmigen Anschlag 4 zwischen die beiden Stirnenden der Rohre 1,2 ragt. Zur Verstärkung der im Ausführungsbeispiel aus Kunststoff bestehenden Rohre 1,2 ist in deren im Kupplungsbereich liegenden Ende eine Stützhülse 5 eingeschoben. Jedem der beiden Rohre 1,2 sind zwei Halbschalen 6 zugeordnet, die unter Bildung einer Axialfuge 7 das zugeordnete Rohr umgreifen, durch radial wirkende Spannmittel gegeneinander spannbar sind, mit einem radial nach innen ragenden Ringbund 8 einen durch den einen U-Schenkel des Kupplungsringes 3 gebildeten Kupplungskragen 9 axial hintergreifen und gemeinsam einen Dichtungsring umschließen.

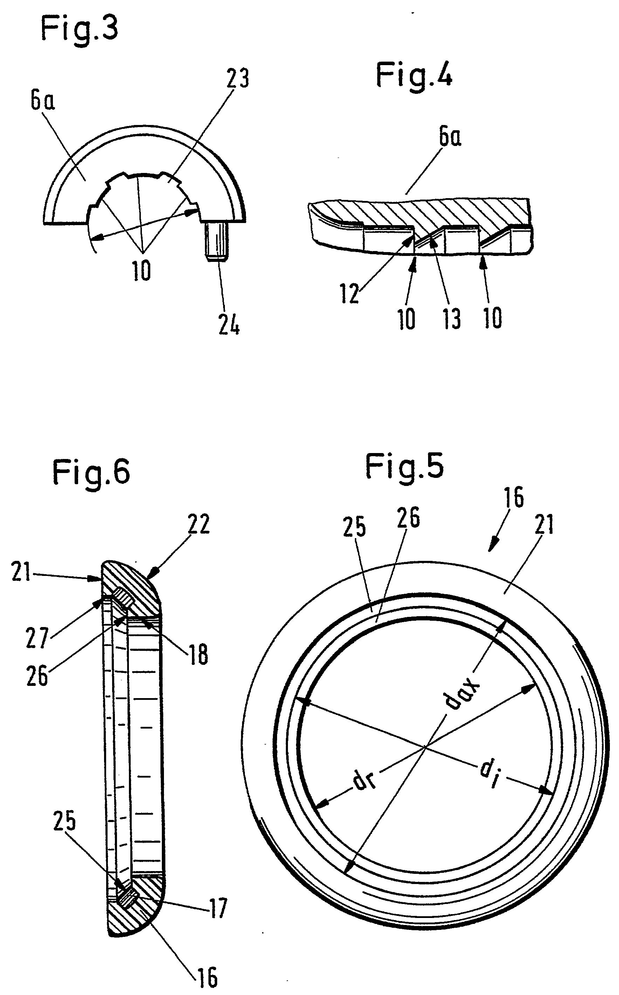

Die Halbschalen 6 liegen mit der mit Oberflächenprofilierungen versehenen Innenwandung eines buchsenförmigen Abschnittes 6a auf der Rohrwand des zugeordneten Rohres auf, so daß ein Anziehen der genannten Spannmittel zu einem Eindrücken der Oberflächenprofilierungen in die Rohrwand führt. Figur 4 läßt erkennen, daß die genannten Oberflächenprofilierungen kreissegmentförmig in Radialebenen angeordnete Zähne 10 sind, deren dem Verbindungsstoß 11 zugewandte Flanke 12 senkrecht zur Rohrachse steht und in eine flach auslaufende rückwärtige Flanke 13 übergeht. Durch diese Ausbildung wird ein Ausziehen des zugeordneten Rohres aus den gegeneinander verspannten Halbschalen 6 weitgehend verhindert.

Die genannten Spannmittel umfassen eine den buchsenförmigen Abschnitt 6a der beiden Halbschalen 6 umschlingende Spannschelle 14, die über Spannschrauben 15 angezogen werden kann (siehe Figur 2).

Die beiden zusammenwirkenden Halbschalen 6 umschließen gemeinsam einen Dichtungsring, der aus einem Elastomer-Formring 16 und einem Innenring 17 besteht, der lose in eine angepaßte Ringnut des Formringes 16 eingelegt ist. Der Dichtungsring stützt sich auf der Rohrwand über eine radial wirkende Dichtfläche 18 und in axialer Richtung einerseits an dem genannten Kupplungskragen 9 und andererseits an einem ebenfalls von den Halbschalen 6 umschlossenen, lose auf das zugeordnete Rohr aufgeschobenen Stützring 19 ab. Letzterer ist als konische Ringscheibe ausgebildet, die sich auf der dem Verbindungsstoß 11 abgewandten Seite an einem Innenkonus 20 der Halbschalen 6 abstützt. Beim Anziehen der Spannschelle 14 wird daher der Stützring 19 in axialer Richtung beaufschlagt und drückt dadurch den in eine konische Dichtungskammer des Stützringes 19 ragenden Dichtungsring 16,17 gegen den Kupplungskragen 9.

Der Formring 16 des Dichtungsringes ist vollständig auf das zugeordnete Rohr aufgeschoben und liegt mit einer vorzugsweise rechtwinklig zur radial wirkenden Dichtfläche 18 liegenden axial wirkenden Dichtfläche 21 an der planen Stirnfläche des Kupplungskragens 9 an. Der Formring 16 weist ferner eine seine beiden Dichtflächen 18,21 miteinander verbindende Mantelfläche 22 in Form eines Viertelkreissegmentes auf.

Der Stützring 19 begrenzt zusammen mit der planen Stirnfläche des Kupplungskragens 9 und der Rohrwand eine ringförmige, im Querschnitt angenähert dreiecksförmige Dichtungskammer, die bei gegeneinander verspannten Halbschalen 6 gegenüber der Außenkontur des unbelasteten Dichtungsringes 16,17 ein Untermaß aufweist.

Figur 3 zeigt die Stirnseite des buchsenförmigen Abschnitts 6a einer Halbschale 6. Die Innenwandung dieses buchsenförmigen Abschnitts 6a weist axial verlaufende Nuten 23 auf, zwischen denen die kreissegmentförmigen Zähne 10 liegen. Ferner läßt Figur 3 erkennen, daß die beiden Halbschalen 6 in der Axialfuge 7 über Stifte 24 ineinandergreifen. Wenn die Halbschalen 6 aus Kunststoff bestehen, kann jede Halbschale einen einteilig mit ihr ausgebildeten Stift 24 aufweisen, dem in der anderen Halbschale ein entsprechendes Sackloch o.dergl. zugeordnet ist.

Die Figuren 5 und 6 lassen erkennen, daß der lichte Innendurchmesser $d_{ax}$ der axial wirkenden kreisringförmigen Dichtfläche 21 größer ist als der Durchmesser $d_r$ der radial wirkenden Dichtfläche 18. Der kleinste lichte Innendurchmesser $d_i$ des Innenringes 17 ist größer als der Durchmesser $d_r$ der radial wirkenden Dichtfläche 18. Der Formring 16 bildet zwischen der sichtbaren, seiner gewölbten Mantelfläche 22 gegenüberliegenden inneren Mantelfläche 25 des Innenringes 17 und seinen beiden Dichtflächen 18,21 eine schmale ringförmige Radial- und Axialfläche 26,27.

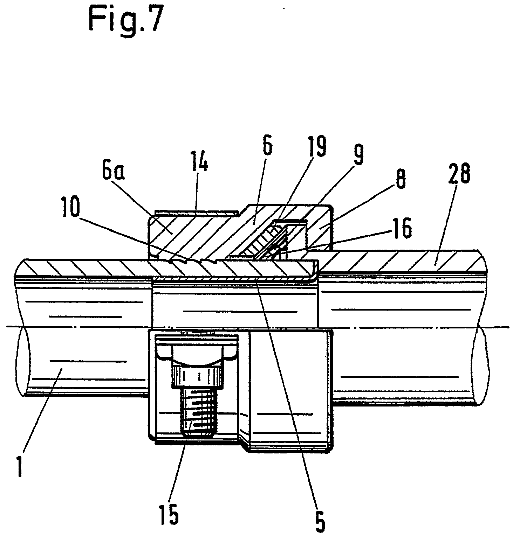

Figur 7 zeigt eine Rohrkupplung zum Anschluß eines ersten Rohres 1 an einem T-Stück 28, Bogen, Kreuz o.dergl.. Dadurch wird deutlich, daß es zur Verwendung der erfindungsgemäßen Rohrkupplung nur eines Kupplungskragens 9 mit einer planen Stirnfläche bedarf. Dieser Kupplungskragen kann Teil einer Armatur, einer Maschine oder eines Rohrfittings sein.

**Patentansprüche**

1. Rohrkupplung zum Anschluß eines ersten Rohres (1) an einem zweiten Rohr (2), einem Rohrbogen (28), einer Armatur, einer Maschine o.dergl., mit zumindest zwei Halbschalen (6), die unter Bildung einer Axialfuge (7) das erste Rohr (1) umgreifen, durch radialwirkende Spannmittel (14,15) gegeneinander spannbar sind, mit einem radial nach innen ragenden Ringbund (8) einen Kupplungskragen (9) axial hintergreifen und gemeinsam einen Dichtungsring (16,17) umschließen, der sich auf der Rohrwand über eine radial wirkende Dichtfläche (18) und in axialer Richtung einerseits direkt oder indirekt an dem genannten Kupplungskragen (9) und andererseits an einem ebenfalls von den Halbschalen (6) umschlossenen, lose auf das erste Rohr (1) aufgeschobenen Stützring (19) abstützt, der beim Anziehen der genannten Spannmittel (14,15) über einen Innenkonus (20) der Halbschalen (6) in axialer Richtung beaufschlagt wird und dadurch den in eine konische Dichtungskammer des Stützringes (19) ragenden Dichtungsring (16,17) gegen den Kupplungskragen (9) drückt, **gekennzeichnet** durch folgende Merkmale:

a) Die Halbschalen (6) liegen mit der mit Oberflächenprofilierungen (10,12,13) versehenen Innenwandung eines buchsenförmigen Abschnittes (6a) auf der Rohrwand des ersten Rohres (1) auf, so daß ein Anziehen der genannten Spannmittel (14,15) zu einem Eindrücken der genannten Oberflächenprofilierungen (10,12,13) in die Rohrwand führt;

b) der Dichtungsring (16,17) besteht aus einem vollständig auf das erste Rohr (1) aufgeschobenen Formring (16), der mit einer vorzugsweise rechtwinklig zur radial wirkenden Dichtfläche (18) liegenden axial wirkenden Dichtfläche (21) an der planen Stirnfläche des Kupplungskragens (9) anliegt und eine seine beiden Dichtflächen (18,21) miteinander verbindende Mantelfläche (22) in Form eines Viertelkreissegmentes aufweist;

c) der Stützring (19) begrenzt zusammen mit der planen Stirnfläche des Kupplungskragens (9) und der Rohrwand eine ringförmige, im Querschnitt angenähert dreiecksförmige Dichtungskammer, die bei gegeneinander verspannten Halbschalen (6) gegenüber der Außenkontur des unbelasteten Dichtungsringes (16,17) ein Untermaß aufweist.

2. Rohrkupplung nach Anspruch 1, dadurch gekennzeichnet, daß der Dichtungsring (16,17) ein Elastomer-Formring (16) mit einem eingebetteten Innenring (17) ist.

3. Rohrkupplung nach Anspruch 2, dadurch gekennzeichnet, daß der Innenring (17) lose in eine angepaßte Ringnut des Formringes (16) eingelegt ist.

4. Rohrkupplung nach Anspruch 3, dadurch gekennziechnet, daß die den Innenring (17) aufnehmende Ringnut mit ihrer offenen Seite der Mantelfläche (22) des Formringes (16) gegenüberliegt.

5. Rohrkupplung nach Anspruch 3 oder 4, dadurch gekennzeichnet, daß der Boden der den Innenring (17) aufnehmenden Ringnut nach außen angenähert parallel zur Mantelfläche (22) des Formringes (16) ausgewölbt ist.

6. Rohrkupplung nach einem der vorhergehenden Ansprüche, dadurch gekennzeichnet, daß der lichte Innnendurchmesser ($d_{ax}$) der axial wirkenden kreisringförmigen Dichtfläche (21) größer ist als der Durchmesser ($d_r$) der radial wirkenden Dichtfläche (18).

7. Rohrkupplung nach einem der Ansprüche 2 bis 6, dadurch gekennzeichnet, daß der kleinste lichte Innendurchmesser ($d_l$) des Innenringes (17) größer ist als der Durchmesser ($d_r$) der radial wirkenden Dichtfläche (18).

8. Rohrkupplung nach Anspruch 7, dadurch gekennzeichnet, daß der Formring (16) zwischen der sichtbaren, seiner gewölbten Mantelfläche (22) gegenüberliegenden inneren Mantelfläche (25) des Innenringes (17) und seinen beiden Dichtflächen (18,21) eine schmale ringförmige Radial- und Axialfläche (26,27) bildet.

9. Rohrkupplung nach einem der vorhergehenden Ansprüche, dadurch gekennzeichnet, daß die genannten Spannmittel (14,15) eine den buchsenförmigen Abschnitt (6a) der beiden Halbschalen (6) umschlingende Spannschelle (14) umfassen.

10. Rohrkupplung nach einem der vorhergehenden Ansprüche, dadurch gekennzeichnet, daß der genannte Stützring (19) eine konische Ringscheibe ist.

11. Rohrkupplung nach einem der vorhergehenden Ansprüche, dadurch gekennzeichnet, daß die Halbschalen (6) in der genannten Axialfuge (7) über Stifte (24) ineinandergreifen.

12. Rohrkupplung nach einem der vorhergehenden Ansprüche, dadurch gekennzeichnet, daß die Halbschalen (6) aus Kunststoff bestehen.

13. Rohrkupplung nach einem der vorhergehenden Ansprüche, dadurch gekennzeichnet, daß zur Verbindung des ersten Rohres (1) mit einem zweiten Rohr (2) der Kupplungskragen (9) durch den einem U-Schenkel eines im Querschnitt U-förmigen Kupplungsringes (3) gebildet ist, der mit seinem U-Steg die beiden Rohre (1,2) übergreift.

14. Rohrkupplung nach Anspruch 13, dadurch gekennzeichnet, daß der Kupplungsring (3) einen ringförmigen Anschlag (4) für die beiden Rohre (1,2) bildet.

15. Rohrkupplung nach einem der vorhergehenden Ansprüche, dadurch gekennzeichnet, daß die genannten Oberflächenprofilierungen (10,12,13) kreissegmentförmig in Radialebenden angeordnete Zähne (10) sind, deren dem Verbindungsstoß (11) zugewandte Flanke (12) senkrecht zur Rohrachse steht und in eine Flach auslaufende rückwärtige Flanke (13) übergeht.

16. Rohrkupplung nach einem der vorhergehenden Ansprüche, dadurch gekennzeichnet, daß in das Ende des zu kuppelnden Rohres (1,2) eine Stützhülse (5) eingeschoben ist.

**Claims**

1. Pipe coupling for connecting a first pipe (1) to a second pipe (2) or tube, a pipe ellbow (28), a fitting, a machine or the like, having at least two half shells (6) encompassing the first pipe (1) or tube in forming an axial gap (7), being strainable relative to one another by radially acting straining means (14, 15), axially gripping behind a coupling collar (9) with a radially inwardly projecting annulus (8) and jointly encompassing a seal ring (16, 17) which engages the tubular wall via a radially acting seal surface (18) and in axial direction on the one hand directly or indirectly said coupling collar (9) and on the other hand a support ring (19) loosely pushed onto the first pipe (1) or tube and likewise encompassed by the half shells (6), said support ring being strained in axial direction when straining said straining means (14, 15) via an internal taper (20) of the half shells (6), thereby urging the seal ring (16, 17) projecting into a tapered seal chamber of the support ring (19) against the coupling collar (9), characterized by the following features:

a) The half shells (6) rest on the tubular wall of the first pipe (1) or tube with the internal wall provided with surface profilings (10, 12, 13) of a bush-shaped section (6a) so that a straining of said straining means (14, 15) results in a pressing of said surface profilings (10, 12, 13) into the tubular wall;

b) the seal ring (16, 17) consists of a form ring (16) completely pushed onto the first pipe (1) or tube, the form ring engaging the planar face of the coupling collar (9) with an axially acting sealing surface (21) preferably disposed at a right angle relative to the radially acting sealing surface (18) and having a peripheral surface (22) interconnecting its two sealing surfaces (18, 21) and being in the form of a quarter circle segment;

c) the support ring (19) together with the planar face of the coupling collar (9) and the tubular wall confines an annular seal chamber of an approximately triangular shape in cross-section, said seal chamber having undersize relative to the external profile of the unstrained seal ring (16, 17).

2. Pipe coupling according to claim 1, characterized in that the seal ring (16, 17) is an elastomeric form ring (16) having an embedded internal ring (17).

3. Pipe coupling according to claim 2, characterized in that the internal ring (17) is inserted loosely into a shape-conformed annular groove of the form ring (16).

4. Pipe coupling according to claim 3, characterized in that the annular groove accommodating the internal ring (17) is disposed opposite to the peripheral surface (22) of the form ring (16) with its open side.

5. Pipe coupling according to claim 3 or 4, characterized in that the base of the annular groove accommodating the internal ring (17) is bulged outwardly approximately parallel to the peripheral surface (22) of the form ring (16).

6. Pipe coupling according to one of the preceding claims, characterized in that the clear internal diameter ($d_{ax}$) of the axially acting annular seal surface (21) is greater than the diameter ($d_r$) of the radially acting seal surface (18).

7. Pipe coupling according to one of claims 2 to 6, characterized in that the minimum clear internal diameter ($d_l$) of the internal ring (17) is greater than the diameter ($d_r$) of the radially acting seal surface (18).

8. Pipe coupling according to claim 7, characterized in that the form ring (16) defines a narrow annular radial and axial surface (26, 27) between the visible internal peripheral surface (25) disposed opposite to its bulged peripheral surface (22), of the internal ring (17), and its two seal surfaces (18, 21).

9. Pipe coupling according to one of the preceding claims, characterized in that said straining means (14, 15) include a clamping shackle (14) encompassing the bush-shaped section (6a) of the two half shells (6).

10. Pipe coupling according to one of the preceding claims, characterized in that said support ring (19) is a tapered annular disc.

11. Pipe coupling according to one of the preceding claims, characterized in that the half shells (6) interengage in said axial gap (7) via pins (24).

12. Pipe coupling according to one of the preceding claims, characterized in that the half shells (6) consist of plastic.

13. Pipe coupling according to one of the preceding claims, characterized in that for connecting the first pipe (1) to a second pipe (2) the coupling collar (9) is formed by the one U-limb of a coupling ring (3) U-shaped in cross-section which grips over both pipes (1, 2) with its U-web.

14. Pipe coupling according to claim 13, characterized in that the coupling ring (3) defines an annular abutment (4) for the two pipes (1, 2).

15. Pipe coupling according to one of the preceding claims, characterized in that said surface profilings (10, 12, 13) are teeth (10) arranged circular-segmentally in radial planes, the flank (12) thereof adjacent to the joint (11) being disposed vertical to the pipe axis and merging in a flatly ending rearward flank (13).

16. Pipe coupling according to one of the preceding claims, characterized in that a supporting sleeve (5) is inserted into the end of the pipe (1, 2) to be coupled.

**Revendications**

1. Raccord pour tubes, destiné à relier un premier tube (1) à un second tube (2), à un coude (28), à un élément de robinetterie, à une machine ou analogue, comportant au moins deux demi-coquilles (6) qui, lorsqu'on réalise une jonction axiale (7), enveloppent le premier tube (1), qui peuvent être serrées l'une contre l'autre par des moyens de serrage (14, 15) agissant radialement, qui enserrent axialement par l'arrière une collerette de raccordement (9) au moyen d'un collet annulaire (8) faisant saillie radialement vers l'intérieur, et qui entourent conjointement une bague d'étanchéité (16, 17), laquelle s'appuie sur la paroi du tube par l'intermédiaire d'une surface d'étanchéité (18) agissant radialement, et, dans la direction axiale, d'un côté directement ou indirectement contre ladite collerette de raccordement (9), et de l'autre côté contre une bague d'appui (19) qui est également entourée par les demi-coquilles (6) et est insérée librement sur le premier tube (1), cette bague d'appui (19) étant appliquée en direction axiale contre un cône intérieur (20) des demi-coquilles (6) quand on serre les moyens de serrage (14, 15), et poussant ainsi contre la collerette de raccordement (9) la bague d'étanchéité (16, 17) qui fait saillie dans une chambre d'étanchéité conique de la bague d'appui (19), caractérisé en ce que:

a) les demi-coquilles (6) reposent sur la paroi du premier tube (1) par l'intermédiaire de la paroi intérieure munie de profils superficiels (10, 12, 13) d'un tronçon en forme de manchon (6a), de sorte que le serrage desdits moyens de serrage (14, 15) provoque l'enfoncement desdits profils superficiels (10, 12, 13) dans la paroi du tube;

b) la bague d'étanchéité (16, 17) se compose d'une bague de forme (16) entièrement insérée sur le premier tube (1), qui porte sur la surface frontale plane de la collerette de raccordement (9) par l'intermédiaire d'une surface d'étanchéité (21) agissant axialement et placée de préférence perpendiculairement à la surface d'étanchéité (18) agissant radialement, et qui comporte une surface latérale (22) reliant l'une à l'autre ses deux surfaces d'étanchéité (18, 21) et ayant la forme d'un quart de cercle;

c) la bague d'appui (19) délimite, conjointement avec la surface frontale plane de la collerette de raccordement (9) et la paroi du tube, une chambre d'étanchéité annulaire, de section sensiblement triangulaire, qui, lorsque les demi-coquilles (6) sont serrées l'une contre l'autre, présente une dimension inférieure au contour extérieur de la bague d'étanchéité (16, 17) dans l'état sans contrainte.

2. Raccord pour tubes conforme à la revendication 1, caractérisé en ce que la bague d'étanchéité (16, 17) est une bague de forme (16) en élastomère dans laquelle est insérée une bague intérieure (17).

3. Raccord pour tubes conforme à la revendication 2, caractérisé en ce que la bague intérieure (17) est insérée librement dans une gorge annulaire conjuguée de la bague de forme (16).

4. Raccord pour tubes conforme à la revendication 3, caractérisé en ce que la gorge annulaire qui reçoit la bague intérieure (17) a son côté ouvert opposé à la surface latérale (22) de la bague de forme (16).

5. Raccord pour tubes conforme à l'une des revendications 3 ou 4, caractérisé en ce que le fond de la gorge annulaire qui reçoit la bague intérieure (17) est recourbé vers l'extérieur sensiblement parallèlement à la paroi latérale (22) de la bague de forme (16).

6. Raccord pour tubes conforme à l'une des revendications précédentes, caractérisé en ce que le diamètre intérieur de passage ($d_{ax}$) de la surface d'étanchéité (21) en forme de couronne annulaire et qui agit axialement est plus grand que le diamètre ($d_r$) de la surface d'étanchéité (18) qui agit radialement.

7. Raccord pour tubes conforme à l'une des revendications 2 à 6, caractérisé en ce que le plus petit diamètre intérieur de passage ($d_i$) de la bague intérieure (17) est plus grand que le diamètre ($d_r$) de la surface d'étanchéité (18) qui agit radialement.

8. Raccord pour tubes conforme à la revendication 7, caractérisé en ce que la bague de forme (16) forme, entre la surface latérale intérieure (25), visible et opposée à sa surface latérale recourbée (22), de la bague intérieure (17) et ses deux surfaces d'étanchéité (18, 21) une surface radiale étroite de forme annulaire (26) et une surface axiale étroite de forme annulaire (27).

9. Raccord pour tubes conforme à l'une des revendications précédentes, caractérisé en ce que les moyens de serrage (14, 15) comprennent un collier de serrage (14) qui enserre les tronçons en forme de manchons (6a) des deux demi-coquilles (6).

10. Raccord pour tubes conforme à l'une des revendications précédentes, caractérisé en ce que la bague d'appui (19) est un disque annulaire conique.

11. Raccord pour tubes conforme à l'une des revendications précédentes, caractérisé en ce que les demi-coquilles (6) sont en prise l'une avec l'autre à l'endroit de la jonction axiale (7) par l'intermédiaire de broches (24).

12. Raccord pour tubes conforme à l'une des revendications précédentes, caractérisé en ce que les demi-coquilles (6) sont en matière plastique.

13. Raccord pour tubes conforme à l'une des revendications précédentes, caractérisé en ce que, pour relier le premier tube (1) à un second tube (2), la collerette de raccordement (9) est formée par une aile d'une bague de raccordement (3) de section en forme de U, laquelle bague (3) de section en U recouvre les deux tubes (1, 2) par l'intermédiaire de l'âme du U.

14. Raccord pour tubes conforme à la revendication 13, caractérisé en ce que la bague de raccordement (3) forme une butée (4) de forme annulaire pour les deux tubes (1, 2).

15. Raccord pour tubes conforme à l'une des revendications précédentes, caractérisé en ce que les profils superficiels (10, 12, 13) sont des dents (10) disposées en forme de segments de cercles dans des plans radiaux et dont le flanc (12) tourné vers le bord de liaison (11) est perpendiculaire à l'axe du tube et se transforme en un flanc arrière (13) plat.

16. Raccord pour tubes conforme à l'une des revendications précédentes, caractérisé en ce qu'une douille de renfort (5) est insérée dans l'extrémité du tube à raccorder (1, 2).

EP 0 277 575 B1

## Fig.1

## Fig.2

Fig.3

Fig.4

Fig.6

Fig.5

Fig.7